# EUROPEAN PATENT APPLICATION

(11) **EP 2 161 895 A1**
(43) Date of publication of application: **10.03.2010**
(21) Application number: 08105255.7
(22) Date of filing: 05.09.2008
(51) Int. Cl.: H04L 29/06, H04L 12/28

(54) **Method and device for data processing in an access node and communication system comprising such device**

(71) Applicant: Nokia Siemens Networks Oy, 02610 Espoo (FI)
(72) Inventor: Bahls, Thomas, 17489 Greifswald (DE); Duchow, Daniel, 17033 Neubrandenburg (DE); Fröhler, Josef, 82065 Baierbrunn (DE); Korbacher, Richard, 82194 Gröbenzell (DE)
(74) Representative: Bruglachner, Thomas E.

(57) **Abstract**

A method and a device for data processing in an access node are suggested, wherein information is provided to or for at least one subscriber via at least one subscriber feedback channel. Furthermore, a communication system is provided comprising said device.

## Description

The invention relates to a method and to a device for data processing in an access node and to a communication system comprising such a device.

A broadband access network aggregates subscriber premises networks (also referred to as customer premises networks, CPNs) and connects each CPN with an aggregation or with a core network.

The access network may comprise an IP DSLAM or a GPON OLT aggregating the connected CPNs. Such IP DSLAM or GPON OLT can also be referred to as an access network node (AN).

Service providers use the access network and the access network nodes to provide and deliver various services, e.g., triple-play high-speed Internet, voice services and/or broadcast TV. Such services require a certain level of quality (QoS), e.g., regarding its bandwidth, delay and availability.

The AN provides several features which can be used by operators to define and to enforce service- and/or subscriber-related rules. For example, the broadcast TV service can be enabled or disabled on a subscriber port of the AN and could be configured in a way that a subscriber's access is limited to a maximum number of video channels simultaneously being watched (and thus broadcasted). Further features of the AN may supply or define a video channel package comprising all channels a subscriber is permitted to subscribe to. The AN supervises the channel subscriptions according to the defined channel package and it may provide rate control and/or block channel subscriptions for an admission control function. Said admission control function may drop channel subscriptions in case an available bandwidth for a particular service will be exceeded and an additional channel is permitted.

Furthermore, features to be provided by the AN may affect or control the traffic flow between a subscriber's port and an AN uplink port. A traffic flow policy implemented may discard all traffic exceeding a maximum amount of traffic for a particular subscriber port. Security features supplied by the AN, e.g., IP anti-spoofing, can be used to supervise a validity of an IP source address within an IP header for subscriber initiated traffic. The security features can be implemented such that data packets are dropped in case manipulation and/or failure is detected.

It is a disadvantage that the subscriber is not informed about any discarded subscriber-related traffic in either upstream or downstream direction. The policy enforced may discard data traffic for various reasons. This may lead to the customer facing an annoying IPTV experience when requesting a channel without receiving any feedback.

For example, the Internet Group Management Protocol (IGMP) may be used as a signaling protocol for multicast-based TV service applications: IGMP does not provide any mechanism to notify a user of, e.g., an unavailability of a service requested. Hence, if the AN is configured to drop, e.g., subscriber-initiated TV-channel requests, the subscriber will not obtain any information other than, e.g., a blank or black TV screen. As an alternative, the subscriber may perceive no response at all, the current channel may remain unchanged. Hence, the user is not able to become aware of the reason for this non-reaction, he may even assume that the button of his remote control is broken. Hence, the service provides a negative Quality of Experience (QoE) to the user.

If the AN enforces its policy and drops packets, the user will not be able to become aware of whether the reason is based on a service restriction or because of a (temporarily) unavailable service. This might even increase the customer's frustration and add to a negative QoE.

The **problem** to be solved is to overcome the disadvantages described above and in particular to improve a QoE for a customer which is supplied by various services via an AN.

This problem is solved according to the features of the independent claims. Further embodiments result from the depending claims.

In order to overcome this problem, a method for data processing in an access node is suggested, wherein information is provided to or for at least one subscriber via at least one subscriber feedback channel.

Such access node may in particular be an access node of an access network (also referred to as "access network node").

Thus, the approach suggested may convey information required by the subscriber via said subscriber feedback channel (SFC) to identify, e.g., a reason of a service interruption or of a service unavailability or to convey further status information from the service provider or from (or via) the access node and/or operator. This approach significantly improves a QoE for the user (subscriber) and thus a service acceptance as well as a user's satisfaction.

The solution is in particular applicable in the area of broadband access networks, e.g., passive optical networks (PONs) or DSL-based access environments.

It is noted that the subscriber comprises any device at the customer's premises, e.g., any customer premises equipment (CPE) such as a DSL modem or an ONT.

In an embodiment, said information is generated based on at least one of the following:
- based on cross (OSI-)layer processing;
- based on a control plane processing at the access node;
- based on a data plane processing at the access node, in particular based on a data analyses at the access node;
- based on data provided by a further network element, in particular by a provider or operator.

Basically, the information can be generated by the access node with or without information conveyed from the service provider or operator to the access node. The access node prepares and/or processes data to be forwarded towards the at least one subscriber. Via cross-layer processing, the access node may in addition or as an alternative process data transmitted from the provider and forward said information (optionally supplemented with further information from the access node) towards the at least one subscriber.

It is in particular an option that the provider or operator conveys information for or via the subscriber feedback channel, e.g., a frozen image within a screen indicating, e.g., that a particular channel is not admissible. Such information can be forwarded to the at least one subscriber. It may also be replaced or changed by the access node and an amended or totally different information can be forwarded to the at least one subscriber.

In another embodiment, said information is generated, processed (e.g., amended) and/or forwarded at the access node.

In a further embodiment, the information is transmitted towards the at least one subscriber.

Said information is in particular automatically transmitted to the at least one subscriber. It may be transmitted according to a predetermined time schedule, e.g., every n seconds.

In a next embodiment, the information is polled and/or requested by the at least one subscriber.

It is also an embodiment that the information comprises at least one of the following:
- statistics information;
- information for/from an application layer;
- information regarding a service interruption;
- information regarding a denial of service;
- information regarding a subscription;
- information regarding an IP TV application;
- status information.

The statistics information may comprise a number of lost packets; it may in particular consider a predetermined period of time (history).

Pursuant to another embodiment, said access node processes data conveyed from the at least one subscriber towards the network, in particular towards a provider or operator. The information can be processed and/or generated based on the data conveyed from the at least one subscriber towards the network.

According to such an approach, e.g., some IP filtering can be provided. In general, data from the at least one subscriber (device) can be filtered, amended and/or processed to extract or generate information to be fed back via said subscriber feedback channel.

According to an embodiment, said access node processes data conveyed from the network, in particular from an operator or a provider towards the at least one subscriber. The information can be processed and/or generated based on said data conveyed from the network towards the at least one subscriber.

According to another embodiment, the access node polices incoming data.

Such policing may comprise utilizing a given policy not limited to a traffic-management application.

Such incoming data, be it from the at least one subscriber and/or from the provider or operator can be utilized to process information to be fed to the at least one subscriber via the subscriber feedback channel.

The access node may be configured to enforce a policy. This may be done autonomously by the access node or the policy may be enforced considering information gathered from the provider or operator, i.e. from the network side.

In yet another embodiment, said subscriber feedback channel is conveyed via in-band or out-band signaling.

The subscriber feedback channel may be conveyed towards the at least one subscriber together with user data, separate from user data or as user data. The subscriber feedback channel may in particular be a logical channel being conveyed via the same physical connection as the actual user data: For example, the subscriber feedback channel may comprise a streaming video comprising frozen pictures, wherein the information to be conveyed to the subscriber is shown within such frozen pictures. For example, the stream may comprise a frozen picture saying "This channel is not admissible according to your subscription".

The approach may be combined with IP TV applications, any kind of video-on-demand application and/or streaming video. The data may comprise in particular video and/or audio data, user data in general, programs, signaling data, etc.

It is in particular noted that the approach is applicable for pure audio applications as well. The information conveyed to the at least one subscriber may then comprise a predetermined audio stream with a voice saying "This channel is not admissible according to your subscription".

The problem stated above is also solved by a device comprising a and/or being associated with a processor unit and/or a hard-wired circuit and/or a logic device that is arranged such that the method as described herein is executable on said processor unit.

According to an embodiment, the device is a communication device, in particular a or being associated with an access node.

The problem stated supra is further solved by a communication system comprising the device as described herein.

Embodiments of the invention are shown and illustrated in the following figure:

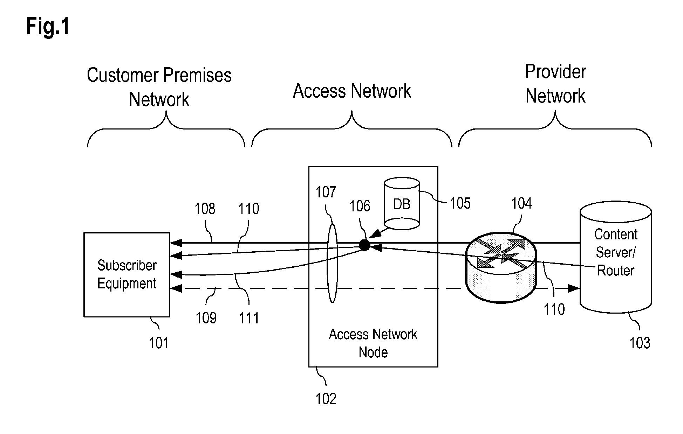

Fig.1 shows an exemplary scenario utilizing two different subscriber feedback channels, one generated by the provider, the other generated by the access node.

The solution presented in particular utilizes a mechanism informing the service subscriber via a subscriber feedback channel (SFC). The subscriber or user is in particular informed or notified via said SFC about any supervisory action performed (by, e.g., an Access Network Node, AN) on a control plane and/or on a data plane. The SFC may be used in case any policy is enforced discarding data at the AN. Such policy enforcement function may preferably be provided with said AN.

The SFC can be generated or amended either by the service provider or by the AN itself. The SFC can be used for conveying various kinds of information to the subscriber, for example:
- an information regarding a service interruption that may in particular be caused by a policy enforcement task of the AN;
- an information regarding a denial of service or any kind of service restriction;
- an information regarding a subscription, in particular referring to an IP TV channel (or to several IP TV channels) that may (not) be permitted; such information may comprise additional statements relating to, e.g., an IGMP membership report that could not be validated;
- a status information to the subscriber, e.g., service- or connection-related information.

The SFC may provide information to the subscriber by means of multicast or by means of unicast, in particular via a video and/or audio stream. Such stream may preferably be conveyed at a low bit rate or at a medium bit rate optionally in combination with a frozen frame.

A destination address of the multicast stream or of the unicast stream can be pre-defined, i.e. it can be known to the provider, to the AN, and to the subscriber or such destination address can be determined based on a TV channel request processed and discarded by the AN.

Exemplary scenarios for the approach suggested are:
(1) The AN discards an IGMP membership report sent from a CPE, e.g., from a subscriber's STB, if the subscriber is not allowed to view the TV channel requested.
   A default information stream instead of the requested TV channels is sent by the provider or by the AN via the SFC to the CPE to inform the subscriber about the restriction and the denial of the subscriber's channel request.
   The subscriber may receive such information stream as a multicast or as a unicast stream: Hence, the subscriber is able to obtain information over the TV or the computer screen as why he does not receive the TV channel requested. Becoming aware of the reason and/or the restriction instead of receiving nothing or getting a black screen only improves the QoE.
(2) The AN may police data packets sent by the subscriber, e.g., DHCP packets, and it may drop packets as a result of a policy enforcement.
   For example, if a configured data rate is exceeded, the service provider or the AN issues information to the subscriber related to packet drops and/or service interruptions caused by a policy enforcement.
   This information can be provided over the SFC as a multicast or as a unicast video stream sent to a pre-defined destination address. The video steam can thus be sent to the CPE, e.g. to the STB at the customer's premises and it could be watched via a TV and/or a computer screen.
(3) The AN drops data packets sent by the subscriber as a result of executing security tasks, e.g., providing IP filtering.
   The AN or the provider may publish status or statistic information towards the subscriber in particular via said SFC, wherein said information may comprise information obtained and provided from security mechanisms running at the AN. Security mechanisms like IP filtering may discard data sent from the subscriber if the packet does not meet security rules as configured at the AN for this particular subscriber.
   Status or statistic information can be sent to the subscriber's CPE via multicast or unicast via said SFC to inform the subscriber.

The subscriber feedback channel (SFC) can be established in different ways: It may be set up and/or utilized by either the AN, the provider equipment (PE), e.g., a video content server deployed with the provider, or both.

**Fig.1** shows an exemplary scenario utilizing two different SFCs. In Fig.1, a customer premises network, an access network and a provider network are illustrated, wherein the customer premises equipment comprises a subscriber equipment 101, e.g., a STB, a PC or the like, the access network comprises an AN 102 and the provider network comprises a network node 104 (e.g., router or switch) and a content server or router 103.

A data path 108 leads from the content server or router 103 through the network node 104 via the AN 102 to the subscriber equipment 101. A control path 109 utilizing, e.g., an IGMP, connects the subscriber equipment 101 and the content server or router 103 via said AN 102 and the network node 104.

The AN 102 comprises a database 105, a replication point 106 and an enforcement point 107.

### Provider-initiated SFC

The provider-initiated SFC is depicted in Fig.1 by the connections 110 from the content server or router 103 via the network node 104 to the replication point 106 and from the replication point 106 to the subscriber equipment 101.

The content of the channel (e.g., an error message) can be generated at the content server or router 103 and sent, e.g., via a video stream with as a frozen frame comprising a general error message, said error message being not event-specific.

The content server and router 103 sends the stream to the AN 102 in response to a dedicated IGMP request from the AN 102 or in a static manner. The AN 102 distributes the stream over the SFC to the corresponding subscriber equipment 101 according to a distribution list generated by the AN 102 itself. The AN 102 may in particular send such stream towards several subscriber equipments (Fig.1 only visualizes one subscriber equipment).

The distribution list comprises subscriber ports and destination channel addresses of the subscriber to which the SFC is preferably to be mapped. It is noted that the SFC can be mapped to different destination addresses depending on the respective event: For example, if the AN 102 blocks a TV channel request, the SFC can be mapped to the address of the requested channel. If the AN 102 discards subscriber packages as a result of a policy enforcement mechanism, the SFC is mapped to a pre-defined channel destination address. However, the content of the SFC may still be non-event-specific.

The provider-initiated SFC involves the content server or router 103 in generating and providing the content and initiation of the SFC and can be efficiently implemented.

### AN-initiated SFC

The AN-initiated SFC is shown in Fig.1 by connection 111. The content for the SFC is generated by the AN 102 in either an event-agnostic or in an event-specific manner.

The content server or router 103 may but does not have to get involved in said generation of the SFC information by the AN. However, the AN may consider information provided by or requested from the content server or router 103 to generated or amend information to be conveyed via the SFC towards the subscriber equipment 101.

A event-agnostic channel content may have a same level of granularity (e.g., error message) as used in the provider-initiated scenario. However, as the AN 102 is the network element enforcing policy, supervising security and/or admission control, the AN 102 is able to generate also event-specific content to be supplied via said SFC.

For example, the AN 102 can generate a specific error message if the subscriber equipment 101 sends a request for a TV channel that is not permitted for such subscriber equipment 101.

The AN 102 can also gather and provide statistic information like a number of dropped packages per event, e.g., IP anti-spoofing, and can send such information via a pre-defined channel to the subscriber equipment 101. The level of granularity of the information which can be provided to the subscriber equipment 101 may be significantly higher than in the event-agnostic case or in case of provider-initiated SFC provisioning.

The SFC may be sent to the subscriber equipment 101 as long as the event is valid. For example a pre-defined SFC can explicitly be used by the subscriber equipment 101 to request a status information. As an alternative, a timer can be provided to count down a predetermined time period, e.g., in case a non-admissible TV channel has been requested. For the duration of the timer counting down, the SFC may convey an according information, e.g., "channel not available/permitted".

### List of Abbreviations:

- AN: Access (Network) Node
- CPE: Customer Premises Equipment
- CPN: Customer Premises Network
- DSLAM: Digital Subscriber Line Access Multiplexer
- EP: Enforcement Point
- GPON: Gigabit Passive Optical Network
- IGMP: Internet Group Management Protocol
- IP: Internet Protocol
- OLT: Optical Line Termination
- PE: Provider Equipment
- QoE: Quality of Experience
- QoS: Quality of Service
- RP: Replication Point
- SFC: Subscriber Feedback Channel
- STB: Set Top Box

## Claims

1. A method for data processing in an access node, wherein information is provided to or for at least one subscriber via at least one subscriber feedback channel.

2. The method according to claim 1, wherein said information is generated based on at least one of the following:
- based on cross layer processing;
- based on a control plane processing at the access node;
- based on a data plane processing at the access node, in particular based on a data analyses at the access node;
- based on data provided by a further network element, in particular by a provider or operator.

3. The method according to any of the preceding claims, wherein said information is generated, processed and/or forwarded at the access node.

4. The method according to any of the preceding claims, wherein the information is transmitted towards the at least one subscriber.

5. The method according to any of the preceding claims, wherein the information is polled and/or requested by the at least one subscriber.

6. The method according to any of the preceding claims, wherein the information comprises at least one of the following:
- statistics information;
- information for/from an application layer;
- information regarding a service interruption;
- information regarding a denial of service;
- information regarding a subscription;
- information regarding an IP TV application;
- status information.

7. The method according to any of the preceding claims, wherein said access node processes data conveyed from the at least one subscriber towards the network, in particular towards a provider or operator.

8. The method according to claim 7, wherein the information is processed and/or generated based on the data conveyed from the at least one subscriber towards the network.

9. The method according to any of the preceding claims, wherein said access node processes data conveyed from the network, in particular from an operator or a provider towards the at least one subscriber.

10. The method according to claim 9, wherein the information is processed and/or generated based on said data conveyed from the network towards the at least one subscriber.

11. The method according to any of the preceding claims, wherein the access node polices data passing the access node.

12. The method according to any of the preceding claims, wherein said subscriber feedback channel is conveyed via in-band or out-band signaling.

13. A device comprising a and/or being associated with a processor unit and/or a hard-wired circuit and/or a logic device that is arranged such that the method according to any of the preceding claims is executable thereon.

14. The device according to claim 13, wherein said device is a communication device, in particular a or being associated with an access node.

15. Communication system comprising the device according to any of claims 13 or 14.
